Europäisches Patentamt

European Patent Office

Office européen des brevets

(19)

(11) **EP 1 267 179 A2**

(12) **EUROPÄISCHE PATENTANMELDUNG**

(43) Veröffentlichungstag:
    **18.12.2002 Patentblatt 2002/51**

(51) Int Cl.⁷: **G01V 8/18**

(21) Anmeldenummer: **02001636.6**

(22) Anmeldetag: **24.01.2002**

(84) Benannte Vertragsstaaten:
    **AT BE CH CY DE DK ES FI FR GB GR IE IT LI LU MC NL PT SE TR**
    Benannte Erstreckungsstaaten:
    **AL LT LV MK RO SI**

(30) Priorität: **14.06.2001 DE 10128557**

(71) Anmelder: **NexPress Solutions LLC**
    **Rochester, New York 14653-7001 (US)**

(72) Erfinder: **Luxem, Wolfgang Eberhard**
    **24107 Kiel (DE)**

(74) Vertreter: **Lauerwald, Jörg**
    **c/o Heidelberger Druckmaschinen AG,**
    **IP-R4,**
    **Dr.-Hell-Strasse**
    **24107 Kiel (DE)**

(54) **Verfahren und Vorrichtung zur Erkennung eines lichtundurchlässigeren Gebietes oder Objektes mittels einer Lichtschranke**

(57)    Die Erfindung betrifft ein Verfahren zur Erkennung eines lichtundurchlässigeren Gebietes oder Objektes im Vergleich zu einem lichtdurchlässigeren Gebiet oder Objekt, vorzugsweise zur Erkennung eines Bedruckstoffes oder Substrates auf einem transparenten Transportband, mittels einer Lichtschranke.

Des weiteren betrifft die Erfindung eine Vorrichtung zur Erkennung eines lichtundurchlässigeren Gebietes oder Objektes im Vergleich zu einem lichtdurchlässigeren Gebiet oder Objekt, vorzugsweise zur Durchführung des vorgenannten Verfahrens, umfassend eine Lichtschranke mit einer Lichtquelle und einem Lichtempfänger.

Der Erfindung liegt die Aufgabe zugrunde, ein Verfahren oder eine Vorrichtung der genannten Gattung dahingehend zu verbessern, daß über einen längeren Zeitraum eine ausreichende Lichtintensität den Lichtempfänger der Lichtquelle erreicht.

Diese Aufgabe wird erfindungsgemäß dadurch gelöst, daß Reflexionsverluste vermieden werden.

Erfindungsgemäß werden Reflexionsverluste bevorzugt dadurch vermieden, daß das Licht der Lichtschranke, welches wenigstens annähernd unter dem sogenannten Brewsterwinkel auf das lichtdurchlässigere Gebiet oder Objekt einfällt, verwendet wird.

Fig. 4

EP 1 267 179 A2

**Beschreibung**

Die Erfindung betrifft ein Verfahren zur Erkennung eines lichtundurchlässigeren Gebietes oder Objektes im Vergleich zu einem lichtdurchlässigeren Gebiet oder Objekt, vorzugsweise zur Erkennung eines Bedruckstoffes oder Substrates auf einem transparenten Transportband, mittels einer Lichtschranke.

Des weiteren betrifft die Erfindung eine Vorrichtung zur Erkennung eines lichtundurchlässigeren Gebietes oder Objektes im Vergleich zu einem lichtdurchlässigeren Gebiet oder Objekt , vorzugsweise zur Durchführung des vorgenannten Verfahrens, umfassend eine Lichtschranke mit einer Lichtquelle und einem Lichtempfänger.

Es ist üblich, insbesondere zur Erkennung eines zu bedruckenden Bogens auf einem transparenten Transportband, in einer Druckmaschine, besonders einer elektrofotographisch arbeitenden Druckmaschine, eine Lichtschranke zu verwenden, die das transparente Transportband mit ihrem Licht durchstrahlt und unterbrochen wird, sobald ein Bedruckstoff oder ein zu bedruckendes Substrat in ihren Strahlengang eintritt. Dabei können eine Lichtquelle und ein Lichtempfänger einander gegenüberliegend auf unterschiedlichen Seiten des Transportbandes angeordnet sein, es können aber auch die Lichtquelle und der Lichtempfänger auf derselben Seite zu einer Sensoreinrichtung zusammengefaßt sein und auf der anderen Seite des Transportbandes ein Lichtreflektor angeordnet sein. Bei der erstgenannten Anordnung würde das Licht das Transportband einmal durchqueren, bei der zweitgenannnten Anordnung das Transportband nach der Reflexion ein zweites Mal durchqueren.

Auf seinem Lichtweg verliert das Licht an Intensität, und zwar mehr Intensität, wenn es das Transportband zweimal durchqueren muß. Es ist einsichtig, daß Lichtintensität durch Lichtabsorption in dem Transportband bei jeder Durchquerung verloren geht. Es treten aber insbesondere auch erhebliche Lichtintensitätsverluste durch Lichtreflexion auf, und zwar an den Oberflächen des Transportbandes bei jedem Eintritt und bei jedem Austritt des Lichtes. Bei zweifacher Durchquerung des Transportbandes gibt es also zweimal Absorptionsverluste und sogar viermal Reflexionsverluste. Es kann gezeigt werden, daß der Anteil der Reflexionsverluste am gesamten Intensitätsverlust bei der Durchquerung des Transportbandes um so größer ist, je lichtdurchlässiger das Transportband ist, also je kleiner die optische Dichte des Transportbandes ist, d.h. je dünner und/ oder je transparenter das Material des Transportbandes ist. Die Reflexionsverluste sind nämlich relativ unabhängig von der optischen Dichte des Transportbandes etwa konstant groß, während die Absorptionsverluste mit der optischen Dichte etwa linear ansteigen. Dabei wird die optische Dichte als

$$D = - \lg (\tau_{ges})$$

Definiert, mit der Gesamttransmission

$$\tau_{ges} = I/I_0$$

dem Verhältnis von transmittierter Lichtintensität I zu der eingestrahlten Lichtintensität $I_0$. Der normierte Gesamtverlust errechnet sich dann aus

$$V_{ges} = 1 - \tau_{ges}.$$

Bei üblicherweise verwendeten transparenten Transportbänder, die in Richtung ihrer Flächennormale, also senkrecht, durchstrahlt werden, liegt die optische Dichte D bei etwa 0,04 bis 0,05. Dies ist ein Dichtebereich, bei dem die Reflexionsverluste gegenüber den Absorptionsverlusten überwiegen, was etwa bis zu einer optischen Dichte von 0,062 der Fall ist. Die Reflexionsverluste sind also relativ erheblich und nicht vernachlässigbar und machen bei einem üblichen Transportband einen Lichtintensitätsverlust von etwa 13% aus. Selbst ohne jegliche Absortionsverluste hätte ein ideal transparentes Transportband eine optische Dichte von mindestens 0,031 allein durch die Reflexionsverluste.

Durch Alterungen und Verschmutzungen sowohl des Transportbandes als auch der Lichtschranke wird der Lichtintensitätsverlust mit der Zeit größer. Die den Lichtempfänger erreichende Intensität wird also immer geringer, bis eine fehlerfreie Arbeit der Lichtschranke zur Erkennung eines Objektes oder auch zum Fehlen eines Objektes nicht mehr gewährleistet ist.

Der Erfindung liegt die Aufgabe zugrunde, ein Verfahren oder eine Vorrichtung der eingangs genannten Gattung dahingehend zu verbessern, daß über einen längeren Zeitraum eine ausreichende Lichtintensität den Lichtempfänger der Lichtquelle erreicht.

Diese Aufgabe wird erfindungsgemäß dadurch gelöst, daß Reflexionsverluste vermieden werden.

Hierdurch erhält die verfahrensgemäße Anordnung eine Verschmutzungsreserve. Das Licht der Lichtschranke kann ohne nennenswerte Reflexionsverluste genutzt werden, so daß sich auch bei länger andauernder Alterung und Verschmutzung des lichtdurchlässigeren Gebietes oder Objektes und/ oder der Lichtschrankenelemente demgegenüber noch ein deutlich registrierbarer Lichtintensitätsunterschied bei einer Abdunklung der Lichtschranke durch ein lichtundurchlässigeres Gebiet oder Objekt ergibt.

Erfindungsgemäß werden Reflexionsverluste bevorzugt dadurch vermieden, daß das Licht der Lichtschranke, welches wenigstens annähernd unter dem sogenannten Brewsterwinkel auf das lichtdurchlässigere Gebiet oder Objekt einfällt, verwendet wird.

Der Brewsterwinkel ist derjenige Winkel, bei dem der parallel zur Einfallsebene schwingende Lichtanteil an der Oberfläche eines optisch dichteren Mediums nicht reflektiert, sondern vollständig in das Medium hineingebrochen wird. Daher ist es bei dem erfindungsgemäßen Verfahren bevorzugt vorgesehen, entsprechend polarisiertes Licht zu verwenden, indem ein geeigneter Polarisator verwendet und entsprechend eingestellt wird. Hierdurch wird auch die Fremdlichtunempfindlichkeit des Verfahrens erhöht. Allerdings würde durch die Verwendung des Brewsterwinkels durch die Teilung des einfallenden Lichtes in einen vollständig in das Medium hineingebrochenen Lichtanteil und einen reflektierten Lichtanteil ohnehin eine Polarisierung des durch das Medium, also durch das lichtdurchlässigere Gebiet oder Objekt, im weiteren transmittierte Licht erfolgen. In jedem Falle kann es daher zwar unnötig, aber vorteilhaft sein, wenn jenseits des Gebietes oder Objektes ein Analysator, wie bevorzugt vorgesehen, verwendet wird, um auch dort den Fremdlichteinfluß zu vermindern.

Bei einem üblichen Brechungsindex des lichtdurchlässigeren Gebietes oder Objektes von beispielsweise n = 1,46 beträgt der Brewsterwinkel $\Theta_B = 55,6°$. Auch bei einer ungenauen Einstellung dieses Brewsterwinkels im Bereich von $\Delta \Theta_B = \pm 5°$ gibt es lediglich Reflexionsverluste des entsprechend polarisierten Lichtes von weniger als etwa 0,25%.

Die Transmission polarisierten Lichtes durch das lichtdurchlässigere Gebiet oder Objekt wird unter Umständen nicht nur durch den Brechungsindex n des verwendeten Mediums beziehungsweise von der optischen Dichte D bestimmt. Insbesondere bei der Verwendung eines transparenten Transportbandes aus Kunststoff für einen Bedruckstoff in einer Druckmaschine kann dieses Transportband, beispielsweise aufgrund von mechanischen Spannungen, eine eigene ausgezeichnete optische Hauptachsenlage mit einem Winkel φ in der Ebene des Transportbandes bezüglich einer gewählten Bezugsrichtung haben. Ein solches Transportband wirkt dann selbst noch einmal wie ein Polarisationsfilter, das nur den vektoriellen Anteil des Lichtes durchläßt, der parallel zur Hauptachenlage schwingt. Um dadurch auftretende zusätzliche Lichtverluste zu vermeiden, ist erfindungsgemäß bevorzugt vorgesehen, die verfahrensgemäße Anordnung auf die Hauptachsenlage durch Drehung ausrichtbar zu machen.

Eine erfindungsgemäße Vorrichtung der eingangs genannten Gattung zeichnet sich in selbständiger Lösung der gestellten Aufgabe dadurch aus, daß die Strahlrichtung der Lichtquelle wenigstens annähernd im sogenannten Brewsterwinkel zur Oberfläche des lichtdurchlässigeren Gebietes oder Objektes eingestellt ist.

Dies vermeidet Reflexionsverluste an Grenzflächen bzw. Oberflächen, wie im Zusammenhang mit dem erfindungsgemäßen Verfahren bereits sinngemäß weiter oben geschildert.

Vorzugsweise wird das verwendete Licht mit einem Polarisator polarisiert und zur Vermeidung von Fremdlichteinfluß durch einen Analysator gesandt.

Die verwendete Lichtschranke ist bevorzugt als Transmissions-Reflexions-Lichtschranke ausgebildet, bei der die Lichtquelle und der Lichtempfänger auf derselben Seite angeordnet sind und dadurch mit Vorteil als Sensoreinheit zusammengefaßt werden können, während sich gegenüberliegend auf der anderen Seite des Gebietes oder Objektes nur ein Reflektor befindet, der vorzugsweise als Winkelspiegel oder Tripelspiegel ausgebildet sein kann. Dabei ist die Winkel- oder Dachkante des Winkelspiegels bevorzugt parallel zu einer Polarisationsrichtung des Lichtes ausgerichtet, um nicht durch die Reflexion die Polarisationsrichtung des Lichtes womöglich zu verändern.

Damit eine Polarisationsrichtung des Lichtes auf eine gegebenenfalls vorhandene optische Hauptachsenlage des lichtdurchlässigeren Gebietes oder Objektes eingestellt werden kann, ist nach einer Weiterbildung der erfindungsgemäßen Vorrichtung vorgesehen, daß die Lichtschranke um ihre optische Achse und/ oder um das Lot auf das Gebiet oder Objekt drehbar ist.

Ein Ausführungsbeispiel der erfindungsgemäßen Vorrichtung, aus dem sich auch weitere erfinderische Merkmale ergeben, auf die die Erfindung in ihrem Umfang aber nicht beschränkt ist, ist in der Zeichnung schematisch dargestellt und erläutert. Es zeigen:

Fig. 1    den prinzipiellen Aufbau einer gattungsgemäßen Vorrichtung in einer Seitenansicht,

Fig. 2    Intensitätsverluste von Licht in Prozent beim Durchgang durch ein Medium als Funktion der optischen Dichte des Mediums,

Fig. 3    den Intensitätsverlust von Licht in Prozent durch Reflexion an der Oberfläche eines Mediums als Funktion des Einfallswinkels und

Fig. 4    den prinzipiellen Aufbau einer erfindungsgemäßen Vorrichtung in einer Seitenansicht.

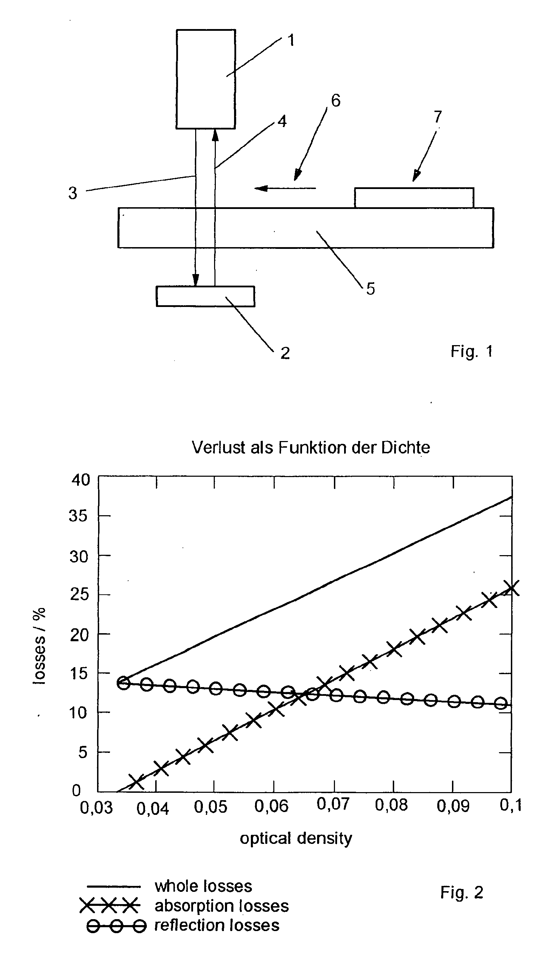

Fig. 1 zeigt den prinzipiellen Aufbau einer gattungsgemäßen Vorrichtung. Dieses Ausführungsbeispiel zeigt in einer Seitenansicht eine Lichtschranke, die aus einer Sensoreinheit 1 und einem Reflektor 2 besteht. Die Sensoreinheit beinhaltet, nicht näher dargestellt, eine Lichtquelle, die einen Lichtstrahl 3 aussendet, und einen Lichtempfänger, der einen vom Reflektor 2 reflektierten Lichtstrahl 4 wieder empfängt. Der ausgesandte Lichtstrahl 3 durchquert ein lichtdurchlässiges Gebiet oder Objekt 5, welches im Ausführungsbeispiel ein Abschnitt eines in einer Transportrichtung 6 bewegbaren, transparenten Transportbandes sein soll. Nach seiner Reflexion am Reflektor 2 durchquert der Lichtstrahl als Lichtstrahl 4 das Objekt 5 noch einmal. Aufgrund seiner Durchquerung des Objektes 5 verliert das Licht 3, 4 an Intensität, und zwar sowohl durch Lichtabsorption im Objekt 5, als auch durch Reflexionsverluste an den Grenz- bzw. Oberflächen des Objektes 5 beim Eintritt und Austritt des Lichtstrahles 3 und beim Eintritt und Austritt des Lichtstrahles 4. Auf diesen Lichtintensitätsverlust wird die Sensoreinheit 1, insbesondere der Lichtempfänger, eingestellt, zur Erkennung, daß sich nur das lichtdurchlässigere Objekt 5 im Weg der Lichtschranke 1, 2 befindet und kein lichtundurchlässigeres oder sogar opakes Objekt 7, wie es ebenfalls in Fig. 1 angedeutet ist. Dieses Objekt 7 soll einen Bedruckstoff bzw. ein Substrat zur Bedruckung darstellen, welches auf und mit dem Objekt 5 in Transportrichtung 6 durch die Lichtschranke transportiert wird. Gelangt das Objekt 7 in den Lichtweg der Lichtschranke 1, 2, so wird dieser unterbrochen oder, sofern das Objekt 7 nur lichtundurchlässiger ist als das Objekt 5, es wird das Licht mehr gedämpft als ohne das Objekt 7. Diese Verminderung der Lichtintensität muß vom Lichtempfänger erkannt werden, was eine gewisse Schwellgröße der Intensitätsdifferenz für eine verläßliche Registrierung verlangt.

Beispielsweise im Bereich einer Druckmaschine, insbesondere einer elektrofotografischen Druckmaschine, kann mit einer solchen Lichtschranke eine Positionserfassung eines zu bedruckenden Bogens (Objekt 7) erfolgen, um mit einem entsprechenden Vorlauf während des weiteren Transportes des Bogens schon das Druckwerk für dessen Bebilderung und für die Bedruckung des Bogens vorzubereiten, um dann genau zeitgerecht die Bedruckung vorzunehmen. Das Eintreffen eines Bogens an der Lichtschranke soll daher verläßlich sicher und zeitgenau erfolgen und zu einem entsprechenden Steuersignal der Lichtschranke führen. Da in der Druckmaschine aber auch in bestimmten Zeitabständen der Bogenzuführung ein bzw. der nächste Bogen im Bereich der Lichtschranke zu erwarten ist, kann es auch eine wichtige Information sein, wenn zum erwarteten Zeitpunkt kein nächster Bogen eintrifft, sondern im Bereich der Lichtschranke fehlt. Auch eine solche Information muß gegebenenfalls verläßlich und zeitgenau erfolgen. Im Laufe der Zeit altert und/ oder verschmutzt aber die vorhandene Einrichtung, seien es die Elemente der Lichtschranke oder noch eher das Objekt 5. Dann wird aber das Objekt 5, zumindest in einigen "verschmutzten" Bereichen lichtundurchlässiger, so daß der Lichtintensitätsverlust in diesen verschmutzten Bereichen größer wird und damit die Differenz des Intensitätsverlustes bzw. der relative, vergleichbare Intensitätsverlust zwischen einem verschmutzten Bereich des Objektes 5 und einem Objekt 7 oder zwischen einem unverschmutzten Bereich des Objektes 5 und einem verschmutzten Bereich des Objektes 5 kleiner wird, und zwar womöglich kleiner als ein Schwellwert bei dem noch ein verläßliches Ansprechen der Sensoreinheit 1 gewährleistet ist. Es könnte also fälschlich ein Objekt 7 auf Objekt 5 nicht erkannt werden oder eine Verschmutzung auf Objekt 5 als Objekt 7 angesehen werden. Beides kann zu ernsthaften Beeinträchtigungen oder Beschädigungen der Druckmaschine führen.

Erfindungsgemäß ist daher vorgesehen, die Differenz des Intensitätsverlustes durch Objekt 5 im Vergleich zu Objekt 7 von vornherein möglichst groß zu machen, indem Reflexionsverluste am Objekt 5 vermieden werden, um eine größere Toleranzbreite und damit mehr Zeit für eine Tolerierung einer Verschmutzung ohne Beeinträchtigung der Verläßlichkeit der Vorrichtung zu haben.

Wie Fig. 2 deutlich macht, sind nämlich die Reflexionsverluste gegenüber Absorptionsverlusten nicht zu vernachlässigen.

In der Fig. 2 sind Intensitätsverluste in Prozent als Funktion der optischen Dichte dargestellt. Der Gesamtverlust ist als ein ungekennzeichneter Graph wiedergegeben, während der Absorptionsverlust ein mit Kreuzen gekennzeichneter Graph ist und der Reflexionsverlust als mit Kreisen gekennzeichneter Graph dargestellt ist. Aus der Fig. 2 ist zu entnehmen, daß bis zu einer optischen Dichte von etwa 0,062 der Reflexionsverlust größer ist als der Absorptionsverlust, daß allein aufgrund des Reflexionsverlustes bereits eine minimale optische Dichte von etwa 0,031 erreicht wird und daß der Reflexionsverlust relativ unabhängig von der optischen Dichte annähernd konstant bleibt.

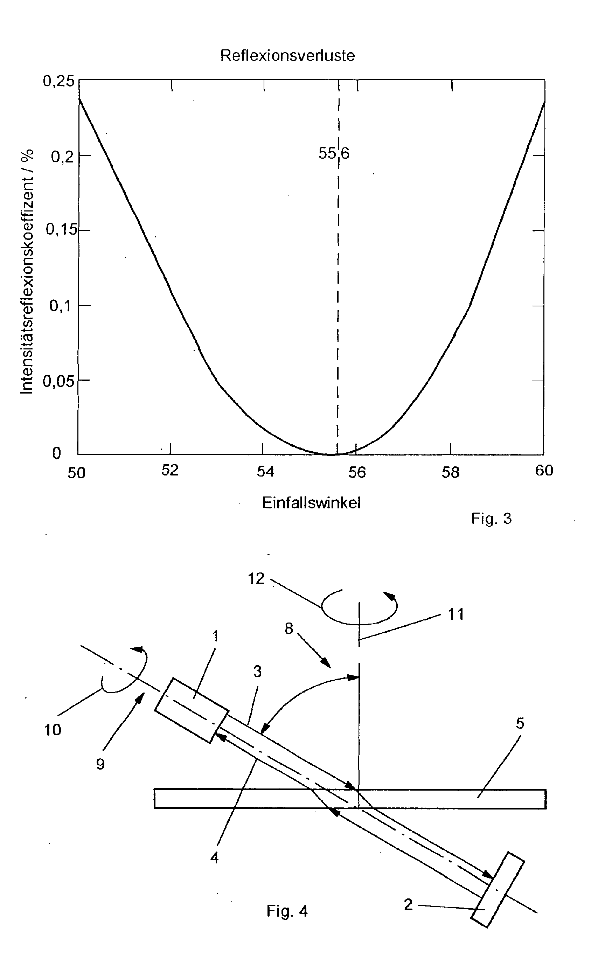

Da üblicherweise in Druckmaschinen mit transparenten Transportbändern mit einer optischen Dichte von etwa 0,04 bis 0,05 gearbeitet wird, ist bei derartigen Transportbändern der Reflexionsverlust als Hauptverlustursache anzusehen. Erfindungsgemäß ist daher vorgesehen, diesen Reflexionsverlust zu vermeiden, indem bevorzugt linear polarisiertes Licht verwendet und parallel zur Einfallsebene ausgerichtet im Brewsterwinkel auf das Transportband eingestrahlt wird. Die Vorrichtung kann zur Polarisation des Lichtes der Sensoreinheit 1 einen Polarisator nachgeschaltet und dem Reflektor 2 einen Analysator vorgeschaltet haben, die aber der Übersichtlichkeit halber in den Fig. 1 und 4 fortgelassen sind.

Fig. 3 zeigt dazu den Reflexionsintensitätsverlust in Prozent als Funktion des Einfallswinkels in Grad. Bei dem gewählten Beispiel, bei dem der Brechungsindex n = 1,46 angenommen ist, ist deutlich das Minimum des Reflexionsverlustes bei dem Brewsterwinkel von 55,6° zu erkennen, und zwar mit einem Funktionswert von 0,0 % Reflexionsverlust. Des weiteren ist aus der Fig. 3 zu entnehmen, daß es relativ unkritisch für den Reflexionsverlust ist, wenn der Brewsterwinkel nicht ganz genau eingestellt wird, weil der Reflexionsverlust links und rechts seines Minimums nur sehr langsam ansteigt, so daß innerhalb des Bereiches des Brewsterwinkels von ± 5° der Reflexionsverlust unter 0,25 % liegt.

Fig. 4 zeigt in einer Seitenansicht schematisch einen beispielhaften, prinzipiellen Aufbau einer erfindungsgemäßen Vorrichtung. Gleiche Bauelemente sind mit denselben Bezugszahlen bezeichnet wie in Fig. 1.

Die Vorrichtung umfaßt Lichtschrankenelemente 1, 2, die mit Lichtstrahlen 3, 4 arbeiten, welche durch das transparente Objekt 5 gebrochen werden. Dabei hat die Lichtschranke eine optische Achse 9, die im Brewster-Einfallswinkel 8 zu der Oberfläche des Objektes 5 ausgerichtet ist. Da zusätzlich das Objekt 5 eine eigene optische Hauptachsenlage haben kann, ist zudem vorgesehen, daß die Lichtschranke zur Ausrichtung der Polarisationsrichtung des polarisierten Lichtes 3, 4 parallel zu der Hauptachsenlage um ihre optische Achse 9 entsprechend des Pfeiles 10 und/oder um das Lot 11 auf die Oberfläche des Objektes 5 entsprechend des Pfeiles 12 drehbar oder schwenkbar ist.

**Patentansprüche**

1. Verfahren zur Erkennung oder zur Erkennung des Fehlens eines lichtundurchlässigeren Gebietes oder Objektes im Vergleich zu einem lichtdurchlässigeren Gebiet oder Objekt, vorzugsweise zur Erkennung eines Bedruckstoffes oder Substrates auf einem transparenten Transportband, mittels einer Lichtschranke, **dadurch gekennzeichnet,** **daß** Reflexionsverluste des Lichtes (3, 4) der Lichtschranke (1, 2) am lichtdurchlässigeren Gebiet oder Objekt (5) vermieden werden.

2. Verfahren nach Anspruch 1, **dadurch gekennzeichnet, daß** das Licht (3, 4) der Lichtschranke (1, 2), welches wenigstens annähernd unter dem sogenannten Brewsterwinkel (8) auf das lichtdurchlässigere Gebiet oder Objekt (5) einfällt, verwendet wird.

3. Verfahren nach Anspruch 1 oder 2, **dadurch gekennzeichnet, daß** parallel zur Einfallsebene polarisiertes Licht verwendet wird.

4. Verfahren nach einem der Ansprüche 1 bis 3, **dadurch gekennzeichnet, daß** ein Analysator mit paralleler Ausrichtung zur Einfallsebene des Lichtes verwendet wird.

5. Verfahren nach einem der vorhergehenden Ansprüche, **dadurch gekennzeichnet, daß** durch eine geeignete Drehung (10, 12) eine zumindest durch die Verwendung des Brewsterwinkels (8) auftretende Polarisation des durch das lichtdurchlässigere Gebiet oder Objekt (5) transmittierten Lichtes (3, 4) in ihrer Richtung parallel zu einer eventuell vorhandenen optischen Hauptachsenlage des lichtdurchlässigeren Gebietes oder Objektes (5) eingestellt wird.

6. Vorrichtung zur Erkennung oder zur Erkennung des Fehlens eines lichtundurchlässigeren Gebietes oder Objektes im Vergleich zu einem lichtdurchlässigeren Gebiet oder Objekt, vorzugsweise zur Erkennung eines Bedruckstoffes oder Substrates auf einem transparenten Transportband, vorzugsweise zur Durchführung des Verfahrens nach einem oder mehreren Ansprüche, umfassend eine Lichtschranke mit einer Lichtquelle und einem Lichtempfänger, **dadurch gekennzeichnet,** **daß** die Strahlrichtung (optische Achse 9) der Lichtquelle wenigstens annähernd im sogenannten Brewsterwinkel (8) zur Oberfläche des lichtdurchlässigeren Gebietes oder Objektes (5) eingestellt ist.

7. Vorrichtung nach Anspruch 6, **gekennzeichnet durch** einen der Lichtquelle nachgeschalteten Polarisator zur Polarisation des Lichtes der Lichtquelle.

8. Vorrichtung nach Anspruch 6 oder 7, **gekennzeichnet durch** einen dem Lichtempfänger vorgeschalteten Analysator.

9. Vorrichtung nach einem der Ansprüche 6 bis 8, **dadurch gekennzeichnet, daß** die Lichtschranke eine Transmissions-Reflexions-Lichtschranke (1, 2) ist, bei der die Lichtquelle und der Lichtempfänger auf einer Seite des lichtdurchlässigeren Gebietes oder Objektes (5) angeordnet sind und ein Lichtreflektor (2) auf der anderen Seite des lichtdurchlässigeren Gebietes oder Objektes (5) angeordnet ist.

10. Vorrichtung nach Anspruch 9, **dadurch gekennzeichnet, daß** der Reflektor (2) als Winkelspiegel ausgebildet ist.

11. Vorrichtung nach Anspruch 10, **dadurch gekennzeichnet, daß** die Winkelkante des Winkelspiegels parallel zu einer Polarisationsrichtung des Lichtes ausgerichtet ist.

12. Vorrichtung nach einem der Ansprüche 6 bis 11, **dadurch gekennzeichnet, daß** die Elemente der Lichtschranke (1, 2) um ihre optische Achse (9) drehbar angeordnet sind.

13. Vorrichtung nach einem der Ansprüche 6 bis 12, **dadurch gekennzeichnet, daß** die Lichtschranke (1, 2) mit ihrer optischen Achse (9) um das Lot (11) auf das lichtdurchlässigere Gebiet oder Objekt (5) drehbar angeordnet ist.

Fig. 1

## Verlust als Funktion der Dichte

optical density

——————— whole losses
✕✕✕ absorption losses
Ο–Ο–Ο reflection losses

Fig. 2

Fig. 3

Fig. 4